# EUROPEAN PATENT SPECIFICATION

(11) **EP 3 928 620 B1**
(45) Date of publication and mention of the grant of the patent: **06.09.2023**
(21) Application number: 21180792.0
(22) Date of filing: 22.06.2021
(51) Int. Cl.: A21C 9/04

(54) **APPARATUS AND METHOD FOR TOPPING PIZZAS**
VORRICHTUNG UND VERFAHREN ZUM GARNIEREN PIZZAS
DISPOSITIF ET PROCEDE DE GARNITURE DE PIZZAS

(30) Priority: 26.06.2020 IT 202000015490
(43) Date of publication of application: 29.12.2021
(73) Proprietor: Dreamfood S.r.l., 41126 Modena (IT)
(72) Inventor: Barbieri, Marco, 41058 VIGNOLA (MODENA) (IT)
(74) Representative: Monelli, Alberto

(56) References cited:
- GB-A- 2 064 291
- US-A- 3 820 503
- US-A- 4 248 173
- US-A- 5 129 353
- US-A1- 2014 050 825

## Description

The present invention relates to an apparatus and a method for topping pizzas.

Topping lines are known wherein the pizzas are transported along two consecutive belts, separated by a gap. While the pizzas are on the upstream belt, the topping products are distributed from above. The products that end up outside the pizzas fall into the gap.

US 2014/050825 A1 discloses a device for providing dough products with a topping material.

Solutions of the known type use a system of conveyor belts for recovering the products. In particular, such system comprises at least one conveyor belt for bringing the recovered products upwards, which extends along numerous metres, with large lateral dimensions of the topping line. In fact, the slope of the conveyor belt must not be excessive in order to enable the gradual lifting of the recovered topping products. Furthermore, such system is not adaptable to different configurations of the topping line.

In this context, the technical task underpinning the present invention is that of proposing an apparatus and method for topping pizzas, which obviate the drawbacks of the prior art cited above.

It is an object of the present invention to propose a pizza topping apparatus with reduced dimensions. The defined technical task and the specified aims are substantially achieved by a pizza topping apparatus and method, comprising the technical characteristics set forth in one or more of the appended claims.

Further characteristics and advantages of the present invention will more fully emerge from the non-limiting description of a preferred but not exclusive embodiment of an apparatus and method for topping pizzas, as illustrated in the accompanying drawings, in which:

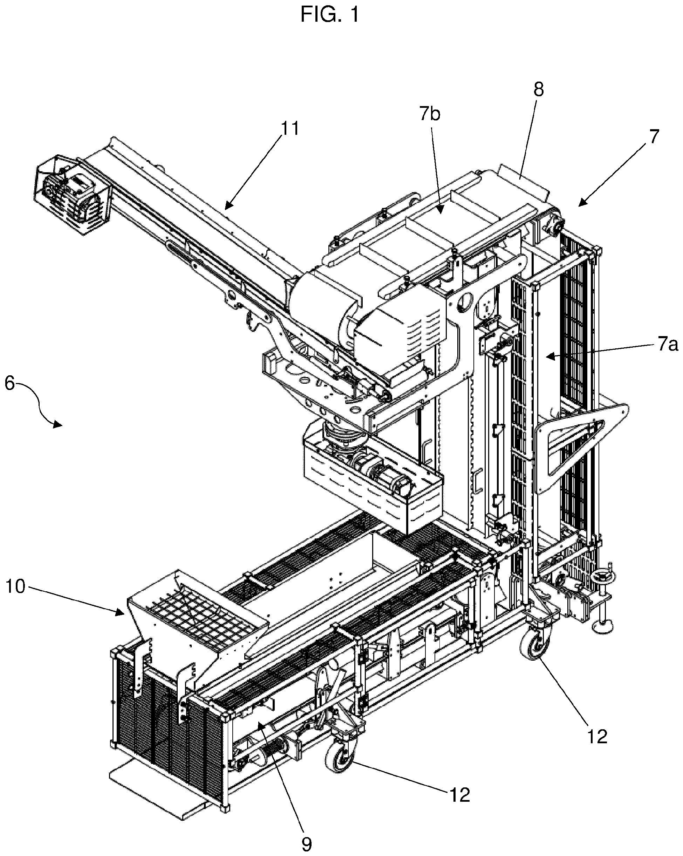

- figure 1 illustrates a detail (product recovering means) of a pizza topping apparatus, in a perspective view;

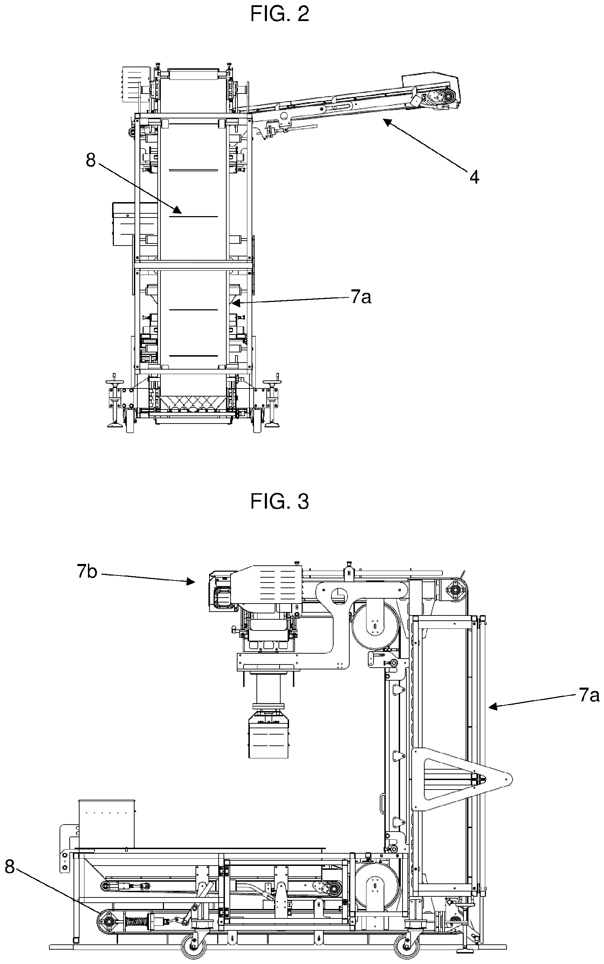

- figure 2 illustrates the recovering means of figure 1, in a lateral view;
- figure 3 illustrates the recovering means of figure 1, in a front view;

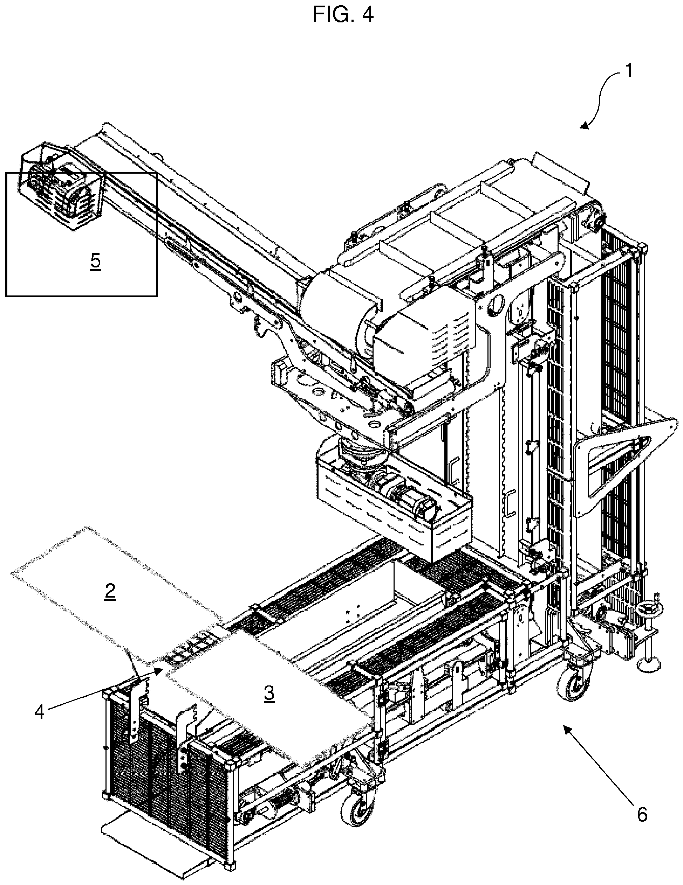

- figure 4 illustrates a pizza topping apparatus, according to the present invention, in a perspective view.

With reference to the figures, number 1 denotes a pizza topping apparatus.

The topping apparatus 1 comprises a conveying path for a plurality of pizzas comprising a first belt 2 and a second belt 3 in series and separated from each another by a gap 4. The first and the second belt 2, 3 are for example conveyor belts. They are consecutive.

The topping apparatus 1 comprises a distribution device 5 for distributing topping products. In particular, such products are ingredients intended for topping the pizzas, e.g. cheese, meat, vegetables, etc. Preferably, such ingredients are discrete solid ingredients.

The distribution device 5 is placed above the first belt 2 so that the pizzas are topped during their transit on the first belt 2. In particular, the products are distributed on the width of the first belt 2. One part of products will fall on the pizzas, whereas the rest will be located on the first belt 2 outside the pizzas.

The pizzas are then transferred from the first 2 to the second belt 3, passing above the gap 4. The part of products located outside the pizzas falls into this gap 4, abandoning the first belt 2. The topping apparatus 1 comprises a recovering means 6 for recovering the products that have fallen into the gap.

Such recovering means 6 comprise a lifting belt 7 for lifting products having at least one part with an extension along a conveying direction inclined upwards.

Originally, the lifting belt 7 comprises a plurality of shelves (trays) 8 for supporting the products during lifting.

Preferably, the shelves 8 are equally spaced from each other along the conveying direction. Appropriately, the lifting belt 7 comprises a flexible strip from which the shelves 8 extend. Appropriately, the shelves 8 have a side adjacent to remaining parts of the lifting belt 7 (in particular adjacent to said flexible strip of the lifting belt 7). Preferably the shelves 8 have a quadrilateral shape. Appropriately, the shelves 8 extend transversally, preferably orthogonally, to a corresponding section of the flexible strip from which they extend. In the preferred solution the shelves 8 extend substantially orthogonal to an advancement direction of the lifting belt 7. Appropriately, the shelves 8 project away from the flexible strip for a distance greater than 4 centimetres, preferably comprised between 4 and 10 centimetres. Advantageously, the shelves 8 are flat slabs.

Preferably, the shelves 8 extend for at least 75% of the width of the lifting belt 7. Preferably, the shelves 8 extend for the entire width of the lifting belt 7 (or more precisely of said flexible strip).

Preferably, the lifting belt 7 has a main vertical extension. In this way, the spatial dimensions of the belt are very limited.

Preferably, the recovering means 6 communicate downstream with the distribution device 5 of the products in such a way to feed it with the recovered products.

In an alternative embodiment, the recovering means 6 communicate downstream with an additional distribution device acting on a topping zone upstream or downstream of the first belt 2.

In the embodiment described and illustrated herein, the recovering means 6 comprise a collecting belt 9 for collecting products that have fallen from the gap 4. The collecting belt 9 develops at least in part below the gap 4. The collecting belt 9 is placed upstream of the lifting belt 7.

Preferably, a hopper 10 is interposed between the gap 4 and the collecting belt 9 for controlling the flow of products falling and for loading the product. Preferably, the recovering means 6 comprise an additional belt 11 receiving the recovered products from the lifting belt 7.

Preferably, the lifting belt 7 comprises a first section 7a having an extension along an inclined conveying direction with respect to the horizontal and a second end section 7b, arranged at the upper end of the first section 7a, having an extension away from the first section 7a according to a conveying direction having a lower inclination than the horizontal than that of the first section 7a. Preferably, the second section 7b is substantially horizontal. Appropriately, the collecting belt 9, the first and the second section 7a, 7b of the lifting belt 7 define a C-shaped structure.

According to the present invention said conveying direction is substantially vertical.

In the preferred embodiment described and illustrated herein, the first section 7a is substantially vertical. Appropriately, the second section 7b is substantially horizontal.

Preferably, the additional belt 11 receives the products from the second section 7b of the lifting belt 7. In particular, the upstream end of the additional belt 11 is arranged below the second section 7b (in particular it is below an unloading end of the second section 7b).

Preferably, the additional belt 11 communicates downstream with the distribution device 5.

In the embodiment described and illustrated herein, the recovering belt 9 extends away from the first and second belt 2, 3 and the second section 7b of the lifting belt 7 extends substantially above a part of the recovery belt 9.

Preferably, the recovering means 6 are provided with wheels or castors 12 in order to be moved on a support surface. This enables the recovering means 6 to be adapted to different pizza topping lines.

A method for topping pizzas, according to the present invention, is described below. Such a method is advantageously implemented by a pizza topping apparatus 1 having one or more of the features described previously.

The method comprises the step of transporting a plurality of pizzas along a first belt 2. In particular, the pizzas to which reference is made must still undergo the baking process.

While the pizzas move along the first belt 2, the topping products are distributed from above in order to top the pizzas. Following the distribution, a part of the products is located on the first belt 2 outside the pizzas.

The topped pizzas are then passed from the first belt 2 to a second belt 3 separated from one another by a gap 4. This causes the products that are located on the first belt outside the pizzas to fall into the gap 4. Preferably, the pizzas are pre-baked so as to be sufficiently rigid to pass safely above the gap 4 from the first to the second belt 2, 3.

The method comprises the step of recovering the products that fall into the gap 4. Such step comprises at least the steps of collecting the products falling from the gap 4 and transporting the collected products upwards. Originally, the step of transporting the collected products upwards takes place by means of a plurality of shelves 8 arranged on a lifting belt 7. Preferably, the products are recovered to be distributed again. Preferably, the products are recovered to be distributed again onto the first belt 2. The characteristics of the apparatus and method for topping pizzas, according to the present invention, are clear, as are the advantages.

In particular, the fact of arranging a lifting belt provided with shelves for transporting the recovered products upwards enables a substantial reduction in the dimensions. In fact, it is possible to adopt a much steeper inclination with respect to the horizontal than known solutions, as the shelves support the products.

## Claims

1. An apparatus (1) for topping pizzas, comprising:
- a conveying path for a plurality of pizzas comprising a first belt (2) and a second belt (3) in series and separated from each other by a gap (4);
- a distribution device (5) for distributing products for topping the pizzas arranged above the first belt (2);
- recovering means (6) for recovering a part of said products fallen in said gap (4) and comprising a lifting belt (7) of said products, at least a part of said lifting belt (7) having a conveying direction inclined upwards,
**characterized in that** said lifting belt (7) comprises a plurality of shelves (8) for supporting the products; said conveying direction being substantially vertical.

2. The apparatus (1) according to claim 1, wherein said recovering means (6) communicate downstream with the distribution device (5) of the products in such a way to feed it with the recovered products.

3. The apparatus (1) according to claim 1 or 2, wherein said recovering means (6) comprise a collecting belt (9) developing at least in part below the gap (4) in such a way to collect the products falling from it, said lifting belt (7) being downstream of said collecting belt (9).

4. The apparatus (1) according to claim 3, wherein said recovering means (6) comprise an additional belt (11) receiving the recovered products from the lifting belt (7), said additional belt (11) communicating with the distribution device (5) downstream.

5. The apparatus (1) according to any one of the preceding claims, wherein the shelves (8) are equally spaced from each other along said conveying direction.

6. The apparatus (1) according to any one of the preceding claims, wherein the shelves (8) extend for at least the 75% of the width of the lifting belt (7).

7. The apparatus (1) according to any one of the preceding claims, wherein the recovering means (6) are provided with wheels or rollers (12) in such a way that they can be moved on a surface.

8. A method for topping pizzas, comprising the steps of:
- conveying a plurality of pizzas along a first belt (2);
- distributing products for topping the pizzas from above on the first belt (2) so as to top the pizzas, a part of the products being on the first belt (2) outside the pizzas;
- making the topped pizzas pass from the first belt (2) and a second belt (3), separated from each other by a gap (4), the products being on the first belt (2) outside the pizzas falling in the gap (4);
- recovering the products falling in the gap (4) in such a way to distribute them again, comprising at least the steps of:
• collecting the products falling from the gap (4);
• conveying said collected products upwards, said step taking place by means of a plurality of shelves (8) arranged on a lifting belt (7) that develops along a conveying direction that is substantially vertical.

9. The method according to claim 8, comprising the step of distributing again the recovered products on the first belt (2).

## Patentansprüche

1. Vorrichtung (1) zum Garnieren Pizzas, umfassend:
- einen Förderweg für eine Vielzahl von Pizzas, der ein erstes Band (2) und ein zweites Band (3) in Reihe umfasst und durch einen Spalt (4) voneinander getrennt ist;
- eine Verteilungsvorrichtung (5) zum Verteilen von Produkten zum Garnieren der über dem ersten Band (2) angeordneten Pizzas;
- Rückgewinnungsmittel (6) zum Rückgewinnen eines Teils der in den Spalt (4) gefallenen Produkte und umfassend ein Hebeband (7) der Produkte, wobei mindestens ein Teil des Hebebands (7) eine nach oben geneigte Förderrichtung aufweist,
**dadurch gekennzeichnet, dass** das Hebeband (7) eine Vielzahl von Regalen (8) zum Tragen der Produkte umfasst; wobei die Förderrichtung im Wesentlichen vertikal ist.

2. Vorrichtung (1) nach Anspruch 1, wobei die Rückgewinnungsmittel (6) stromabwärts mit der Verteilungsvorrichtung (5) der Produkte kommunizieren, um sie mit rückgewonnenen Produkten zu versorgen.

3. Vorrichtung (1) nach Anspruch 1 oder 2, wobei die Rückgewinnungsmittel (6) ein Sammelband (9) umfassen, das sich zumindest teilweise unterhalb des Spalts (4) entwickelt, um die von ihm fallenden Produkte zu sammeln, wobei das Hebeband (7) stromabwärts des Sammelbands (9) angeordnet ist.

4. Vorrichtung (1) nach Anspruch 3, wobei die Rückgewinnungsmittel (6) ein zusätzliches Band (11) umfassen, das die rückgewonnenen Produkte von dem Hebeband (7) aufnimmt, wobei das zusätzliche Band (11) stromabwärts mit der Verteilungsvorrichtung (5) kommuniziert.

5. Vorrichtung (1) nach einem der vorhergehenden Ansprüche, wobei die Regale (8) entlang der Förderrichtung gleichmäßig voneinander beabstandet sind.

6. Vorrichtung (1) nach einem der vorhergehenden Ansprüche, wobei sich die Regale (8) über mindestens 75 % der Breite des Hebebands (7) erstrecken.

7. Vorrichtung (1) nach einem der vorhergehenden Ansprüche, wobei die Rückgewinnungsmittel (6) mit Rädern oder Rollen (12) versehen sind, sodass sie auf einer Oberfläche bewegt werden können.

8. Verfahren zum Garnieren Pizzas, umfassend die folgenden Schritte:
- Befördern einer Vielzahl von Pizzas entlang eines ersten Bandes (2);
- Verteilen von Produkten zum Garnieren der Pizzas von oben auf dem ersten Band (2), um die Pizzas zu garnieren, wobei sich ein Teil der Produkte auf dem ersten Band (2) außerhalb der Pizzas befindet;
- Lassen die garnierten Pizzas von dem ersten Band (2) und einem zweiten Band (3), die durch einen Spalt (4) voneinander getrennt sind, übergehen, wobei sich die Produkte auf dem ersten Band (2) außerhalb der in den Spalt (4) fallenden Pizzas befinden;
- Rückgewinnen der in den Spalt (4) fallenden Produkte in einer Weise, um sie wieder zu verteilen, umfassend mindestens die folgenden Schritte:
• Sammeln der aus dem Spalt (4) fallenden Produkte;
• Befördern der gesammelten Produkte nach oben, wobei der Schritt mittels einer Vielzahl von Regalen (8) erfolgt, die auf einem Hebeband (7) angeordnet sind, das sich entlang einer im Wesentlichen vertikalen Förderrichtung entwickelt.

9. Verfahren nach Anspruch 8, umfassend den Schritt zum erneuten Verteilen der rückgewonnenen Produkte auf dem ersten Band (2).

## Revendications

1. Dispositif (1) de garniture de pizzas, comprenant :
- un parcours de transport pour une pluralité de pizzas, comprenant une première bande (2) et une deuxième bande (3) en série et séparées l'une de l'autre par un interstice (4) ;
- un dispositif de distribution (5) de produits de garniture des pizzas disposé au-dessus de la première bande (2) ;
- des moyens de récupération (6) pour récupérer une partie desdits produits tombés dans ledit interstice (4) et comprenant une bande de levage (7) desdits produits, au moins une partie de ladite bande de levage (7) ayant une direction de transport inclinée vers le haut,
**caractérisé en ce que** ladite bande de levage (7) comprend une pluralité d'étagères (8) pour supporter les produits ; ladite direction de transport étant substantiellement verticale.

2. Dispositif (1) selon la revendication 1, dans lequel lesdits moyens de récupération (6) communiquent en aval avec le dispositif de distribution (5) des produits de manière à l'alimenter avec les produits récupérés.

3. Dispositif (1) selon la revendication 1 ou 2, dans lequel lesdits moyens de récupération (6) comprennent une bande de collecte (9) se développant au moins en partie en dessous de l'interstice (4) de manière à collecter les produits qui en tombent, ladite bande de levage (7) étant en aval de ladite bande de collecte (9) .

4. Dispositif (1) selon la revendication 3, dans lequel lesdits moyens de récupération (6) comprennent une bande supplémentaire (11) recevant les produits récupérés de la bande de levage (7), ladite bande supplémentaire (11) communiquant avec le dispositif de distribution (5) en aval.

5. Dispositif (1) selon l'une quelconque des revendications précédentes, dans lequel les étagères (8) sont également espacées les unes des autres le long de ladite direction de transport.

6. Dispositif (1) selon l'une quelconque des revendications précédentes, dans lequel les étagères (8) s'étendent sur au moins 75 % de la largeur de la bande de levage (7).

7. Dispositif (1) selon l'une quelconque des revendications précédentes, dans lequel les moyens de récupération (6) sont munis de roues ou de rouleaux (12) de manière à pouvoir être déplacés sur une surface.

8. Procédé de garniture de pizzas, comprenant les étapes suivantes :
- transporter une pluralité de pizzas le long d'une première bande (2) ;
- distribuer des produits pour la garniture des pizzas par le haut sur la première bande (2) de manière à napper les pizzas, une partie des produits étant sur la première bande (2) en dehors des pizzas ;
- faire passer les pizzas garnies de la première bande (2) et d'une seconde bande (3), séparés l'une de l'autre par un interstice (4), les produits étant sur la première bande (2) à l'extérieur des pizzas tombant dans l'interstice (4) ;
- récupérer les produits tombant dans l'interstice (4) de manière à les distribuer à nouveau, comprenant au moins les étapes de :
• collecter les produits tombant de l'interstice (4) ;
• transporter lesdits produits collectés vers le haut, ladite étape ayant lieu au moyen d'une pluralité d'étagères (8) disposées sur une bande de levage (7) qui se développe le long d'une direction de transport qui est sensiblement verticale.

9. Procédé selon la revendication 8, comprenant l'étape de distribuer à nouveau les produits récupérés sur la première bande (2).
